# FASCICULE DE BREVET EUROPEEN

(11) **EP 0 538 164 B1**
(45) Date de publication et mention de la délivrance du brevet: **05.03.1997**
(21) Numéro de dépôt: 92460029.9
(22) Date de dépôt: 15.10.1992
(51) Int. Cl.: G02B 6/44

(54) **Tête de câbles modulaire à fibres optiques de grande capacité**
Verteilergestell für optische Kabel hoher Kapazität
Distribution head for high capacity optical cables

(30) Priorité: 15.10.1991 FR 9112857
(43) Date de publication de la demande: 21.04.1993
(73) Titulaire: FRANCE TELECOM, 75015 Paris (FR)
(72) Inventeur: Capelle, Bruno, F-22300 Ploubezre (FR); Petit, Régis, F-22700 Perros Guirec (FR); Lecoq, Daniel, F-22300 Lannion (FR)
(74) Mandataire: Corlau, Vincent

(56) Documents cités:
- EP-A- 0 348 278
- EP-A- 0 369 524
- DE-U- 8 809 714
- GB-A- 2 166 262

## Description

Le domaine de l'invention est celui des boîtiers de terminaison et/ou de raccordement des câbles à fibres optiques également connus sous le nom de tête de câbles.

Les têtes de câbles sont concues de façon à pouvoir remplir un certain nombres de fonctions et notamment celles consistant à :
- assurer l'arrêt et le maintien mécanique des éléments constitutifs des câbles de fibres optiques raccordés, notamment le porteur central, le jonc rainuré ou le tube, et les renforts périphériques à mèches ou baguettes, ainsi que la gaine extérieure d'étanchéité ;
- permettre la connexion entre les fibres optiques du câble et les équipements qui doivent y être raccordés ;
- assurer le logement, de façon stable et protégée, des raccords de fibres ainsi que des longueurs de réserve de fibres optiques, sur des supports spécifiques (généralement dénommés organiseurs d'épissures). Des longueurs de réserve de fibres optiques sont en effet prévues pour permettre des opérations ultérieures de réépissure des câbles et de raccordement à de nouveaux équipements. La fonction de logement doit naturellement respecter les contraintes garantissant un bon fonctionnement des fibres, notamment les contraintes d'étanchéité aux intempéries, et de rayon de courbure minimal des enroulements de fibres ;
- fournir un espace de rangement des tronçons de transfert de fibres s'étendant entre les extrémités de câbles et l'organiseur d'épissures d'une part et entre l'organiseur d'épissures et les connecteurs d'autre part, cet espace suffisant devant permettre le rangement de ces tronçons de fibres optiques en respectant les contraintes garantissant leur bon fonctionnement ;
- permettre la manipulation des raccords et des fibres, tant au cours du premier montage, que lors des éventuelles réinterventions, et ce sans entraver le fonctionnement des liaisons voisines.

On connaît déjà des têtes de câbles remplissant plus ou moins bien au moins certaines de ces fonctions pour au moins certains types de câbles. On distingue en effet plusieurs types de câbles à fibres optiques et notamment des câbles dans lesquels les fibres sont maintenues autour d'un porteur central et d'autres câbles dans lesquels les fibres sont maintenues par tubes de guidage, plusieurs fibres optiques (généralement jusqu'à six) pouvant être réunies dans un même tube. Parmi les câbles dans lesquels les fibres optiques sont maintenues autour d'un porteur central, celui-ci peut se présenter par exemple sous la forme d'un jonc rainuré (à pas hélicoïdal ou alterné). Les fibres optiques sont alors disposées autour de ce porteur central et éventuellement tubées.

Le document de brevet français FR 2 517 076 décrit une tête de câbles constituée d'un boîtier muni d'au moins deux tambours permettant l'enroulement et le stockage des longueurs excédentaires de réserve des fibres optiques d'un câble et d'une pluralité de "tiroirs", accessibles à l'utilisateur, permettant de raccorder les fibres par épissure à d'autres fibres ou d'équiper ces fibres de connecteurs permettant le raccordement à des équipements. Ces tiroirs font donc fonction, suivant l'utilisation, d'organiseur d'épissures ou de platine de connexion. De chaque tiroir peuvent être sorties les extrémités d'une série de fibres optiques fixées sur la partie mobile de celui-ci. Afin de permettre cette opération, les fibres forment des boucles entre les tambours et les tiroirs lorsque ceux-ci sont fermés, boucles qui se résorbent lors de l'ouverture du tiroir et qui se reforment lors d'une nouvelle fermeture. Le principal inconvénient de ces têtes de câbles est de ne présenter qu'un nombre limité de tambours sur chacun desquels doivent être enroulées les longueurs excédentaires de plusieurs fibres optiques. Il en résulte une absence d'individualisation des fibres à ce niveau ce qui réduit leur accessibilité. De plus, lorsque différentes fibres optiques aboutissant dans un même tiroir sont enroulées sur des tambours différents, ces fibres peuvent s'emmêler lors de l'actionnement du tiroir. Par ailleurs, l'ouverture de chaque tiroir entraîne un déplacement important de tronçons de fibres optiques, avec une grande variation de leur rayon de courbure ce qui peut perturber l'acheminement des signaux qui y circulent. Un autre inconvénient de ce type de tête de câbles, par ailleurs commun à tous les matériels actuellement disponibles sur le marché, est représenté par sa faible capacité. La faible capacité des têtes de câbles a pour principal inconvénient de nécessiter la fabrication de répartiteurs de grand volume et conséquemment d'un coût élevé.

Un autre type de tête de câbles est décrit dans le document de brevet français FR 2 517 076. Le dispositif divulgué par ce document comprend une pluralité de corps creux cylindriques montés adjacents l'un à l'autre, présentant une rainure périphérique permettant de bobiner les longueurs excédentaires de fibres et une batterie de connecteurs montée fixe sur un support parallèle à l'axe longitudinal des corps creux. Les diamètres des corps creux sont conçus de façon à respecter un rayon de courbure minimal des fibres optiques. Ce type de matériel présente ainsi l'inconvénient d'occuper un volume important puisqu'il comprend un corps cylindrique pour chaque fibre. De telles têtes de câbles présentent également l'inconvénient de ne pas permettre le raccord par épissures d'un câble à un autre câble. Par ailleurs, la manipulation des fibres optiques impose de déporter les cassettes discoïdales, avec tous les risques et problèmes qui en résultent pour les tronçons de fibres qui y sont reliés. Ce système présente également, pour un volume donné, une faible capacité d'accueil essentiellement due au fait qu'un corps creux cylindrique possédant un diamètre relativement important est dévolu au stockage de la longueur excédentaire de chaque fibre.

On connaît d'autre type de tête de câbles dont les cassettes en forme de disques évidés reçoivent en leur centre les raccords et les longueurs de réserve de fibres. Ces disques sont rangés de façon juxtaposée et coaxiale, et sont extractibles de leur position de rangement, librement et séparément, pour assurer le montage et la maintenance.

Des autres exemples pour des têtes de câble peut être trouver dans US-A-4,792,203 ou US-A-4,824,196.

Toutes les têtes de câbles actuellement disponibles, outre leur faible capacité, présentent l'inconvénient générique d'offrir un accessibilité limitée lors des opérations de raccordement et/ou lors des opérations de maintenance. En effet, les éléments constitutifs de ces têtes de câbles sont généralement disposés à l'intérieur d'un boîtier muni d'une arrivée de câble qui doit être démonté pour accéder à ces éléments constitutifs. L'évolution de la connectique de ces têtes, lorsqu'elle est possible, est souvent très délicate à mettre en oeuvre et induit généralement un nombre important d'opérations.

L'invention a pour objectif de fournir une tête de câbles à fibres optiques, permettant de pallier notamment les divers inconvénients des systèmes existants.

L'un des principaux objectifs de la présente invention est de fournir une tête de câbles permettant l'accès à la fois aux longueurs excédentaires de fibres optiques, aux épissures et à la connectique selon une manipulation simple et rapide et présentant une très grande facilité de montage et de maintenance, grâce à une très bonne accessibilité des différents éléments la constituant.

Un autre objectif de l'invention est de permettre l'accès aux fibres optiques,leur manipulation, leur connexion et leur épissure sans interrompre les transmissions des données circulant dans les autres fibres optiques contenues dans la tête de câbles.

Plus précisément, un objectif de l'invention est de fournir un module de raccordement de câbles à fibres optiques qui soit conçu de façon à limiter les longueurs de transfert des fibres entre les zones d'épanouissement des câbles et les dispositifs de raccordement et de lovage des longueurs de réserve des fibres optiques tout en assurant une grande stabilité et fiabilité des raccordements.

Un autre objectif de l'invention est de fournir une tête de câbles présentant une compatibilité totale avec toutes les sortes de câbles à fibres optiques existants. La conception du boîtier de l'invention permet d'obtenir cette compatibilité à un coût de revient extrêmement faible tant du point de vue des éléments structurels que de leur utilisation en position verticale ou horizontale.

Encore un autre objectif de l'invention est de fournir une tête de câbles pouvant accueillir un grand nombre de fibres optiques dans un faible volume et pouvant être fabriquée sous forme modulaire de façon à pouvoir être associée à une ou plusieurs autres têtes du même type et à constituer un ensemble de brassage de fibres optiques à haute capacité.

Enfin, un objectif complémentaire de l'invention est de fournir une tête de câble de réalisation très simple et peu onéreuse, sans aucune pièce complexe, tout en remplissant l'ensemble des autres objectifs.

L'invention concerne une tête de câbles modulaire à fibres optiques, chaque câble étant notamment du type incluant une pluralité de fibres optiques, l'exploitation des modules de fibres optiques contenues dans ledit câble ;
- au moins un organiseur d'épissures permettant le rangement et/ou l'épissurage desdites fibres optiques ;
- au moins une platine de connexion permettant notamment la connexion des fibres optiques à des équipements par l'intermédiaire de jarretières individuelles,
- ledit organiseur d'épissures et ladite platine de connexion sont fixés à proximité l'un de l'autre sur un même support monté mobile sur ledit boîtier selon une course guidée définissant une position fermée de fonctionnement et au moins une position ouverte d'accès,
ledit support, l'organiseur d'épissures et la platine de connexion constituant un ensemble basculant, les liaisons allant du sous-ensemble d'épanouissement à l'organiseur d'épissures présentant une position d'extension telles qu'au moins une portion de ces liaisons passe à proximité immédiate de l'axe de rotation dudit support sur le boîtier, ledit axe de rotation étant perpendiculaire à la direction d'entrée des fibres optiques dans l'organiseur d'épissures ;
ledit organiseur d'épissures des fibres optiques étant constitué de cassettes modulaires articulées permettant de manipuler les fibres contenues dans chacune d'entre elles sans perturber les liaisons en service, ledit organiseur d'épissures étant fixé audit support par au moins une charnière permettant son basculement en position de travail et la manipulation desdites cassettes lorsque ledit boîtier est ouvert.

L'invention présente ainsi l'avantage de permettre le raccordement direct des connecteurs aux fibres nues, grâce à la faible distance existant entre les connecteurs fixés sur la platine de connexion et les fibres sortant de l'organiseur d'épissures. Cette caractéristique constitue un progrès considérable par rapport aux têtes de câbles de l'état de la technique qui nécessitent toutes de protéger les fibres par des gaines pour les amener aux connecteurs. Une telle opération de protection étant relativement longue et complexe à mettre en oeuvre, l'invention permet de réaliser un gain de temps et de coût non négligeables lors de la construction de telles têtes de câbles.

Préférentiellement, ledit support présente deux plans décalés, ledit organiseur d'épissures étant fixé sur l'un de ces plans et ladite platine de connexion étant fixée sur l'autre de ces plans. Cette disposition autorise une diminution de l'encombrement de la tête de câbles, les deux plans décalés définissant un retrait apte à contenir les parties des connecteurs saillant à l'extérieur du boîtier. Un avantage notoire présenté par une telle disposition est constitué par le fait que les fibres optiques raccordées au niveau de ces connecteurs se trouvent ainsi protégées.

Préférentiellement l'axe de rotation dudit support sur le boîtier est déporté latéralement par rapport à l'organiseur d'épissures et à la platine de connexion.

Selon l'invention, les liaisons allant du sous-ensemble d'épanouissement à l'organiseur d'épissures ont une position d'extension telles qu'au moins une portion de ces liaisons passe à proximité immédiate de l'axe de rotation. Cette disposition est particulièrement intéressante car lors de l'ouverture du boîtier, la rotation du support n'entraînera pas de changement important dans la position de la portion de ces liaisons située à proximité de l'axe de rotation. La portion des liaisons située à proximité dudit axe de rotation de l'ensemble basculant se déplacera peu lors des opérations d'ouverture et de fermeture du boîtier. Seul le rayon de courbure des liaisons variera de façon importante au niveau de cette portion tout en respectant le rayon de courbure minimal des fibres optiques. Les autres portions de ces liaisons subiront un déplacement plus important lors des opérations d'ouverture et de fermeture du boîtier mais leur rayon de courbure ne changera pratiquement pas. Ainsi, le fonctionnement desdites liaisons ne risquera pas d'être perturbé lors des interventions menées sur le boîtier.

Préférentiellement, ladite charnière est fixée audit support perpendiculairement à l'axe de rotation de l'ensemble basculant.

Avantageusement ladite platine de connexion est au moins partiellement amovible de façon à permettre l'évolution de la connectique et du nombre de connexions sans perturber les connexions en service.

Egalement avantageusement, ladite platine de connexion peut être constituée de connecteurs munis de fibres amorces destinées à être reliées à la demande aux fibres présentes dans l'organiseur d'épissures.

Selon un mode de réalisation intéressant, des moyens de guidage et de maintien de jarretières sont fixés sur un plan en saillie par rapport au plan de fixation de connecteurs, de façon à permettre le respect d'un rayon minimal de courbure des fibres et à faciliter la préhension des jarretières.

Préférentiellement lesdits moyens de guidage sont constitués par des peignes pouvant être collés à la demande et suivant l'orientation de la tête de câble sur ledit support.

Egalement préférentiellement, un capot de protection transparent amovible est emboîté sur la face extérieure dudit support de façon à permettre la protection et le repérage par étiquetage de l'ensemble des connexions et des départs de jarretières.

Avantageusement, la tête de câbles comprend deux entrées de câbles, l'une ou l'autre pouvant accueillir un câble entrant et/ou un câble sortant, au moins certaines des fibres du câble sortant étant raccordées à certaines des fibres du câble entrant au niveau de l'organiseur d'épissures.

D'une façon préférentielle, ledit boîtier est muni de moyens de passage de câbles ou de fibres vers un autre boîtier pouvant être clos par des moyens de fermeture provisoires.

Bien que l'invention vise une tête de câbles modulaire, c'est-à-dire présentant des moyens lui permettant d'être associée à d'autres têtes de câbles du même type, l'invention concerne plus précisément une double tête de câbles à fibres optiques caractérisée en ce qu'elle est constituée d'une première tête de câbles et d'une seconde tête de câbles , la ou les entrées de câbles de ladite première et de ladite seconde tête et les moyens de passage de câbles ou de fibres entre ladite première et ladite seconde tête étant positionnés de façon à ce que ladite première tête puise être placée symétriquement par rapport à la seconde tête, de façon à ce que les câbles arrivent parallèlement dans ladite première et ladite seconde tête et de façon à ce que la platine de connexion de ladite première tête et la platine de connexion de ladite seconde tête soit placée le plus près possible l'une de l'autre.

L'invention, ainsi que les différents avantages qu'elle présente seront plus facilement compris grâce à la description qui va suivre d'un exemple non limitatif de réalisation en référence aux dessins dans lesquels :
- la figure 1 représente un boîtier rentrant dans la constitution d'une tête de câbles selon l'invention ;
- la figure 2 représente une vue en perspective et en transparence de la tête de câble selon l'invention, le boîtier selon la figure 1 étant en position fermée de fonctionnement;
- la figure 3 représente une vue en perspective de la même tête de câbles, le boîtier selon la figure 1 étant en position ouverte d'accès pour intervention;
- la figure 4 représente un ensemble de brassage de fibre optiques d'une capacité de 144 fibres constitué de deux têtes de câbles modulaires conformes à l'invention ;
- la figure 5 représente des moyens d'étiquetage du support de la tête de câbles selon les figures 2 et 3 ;

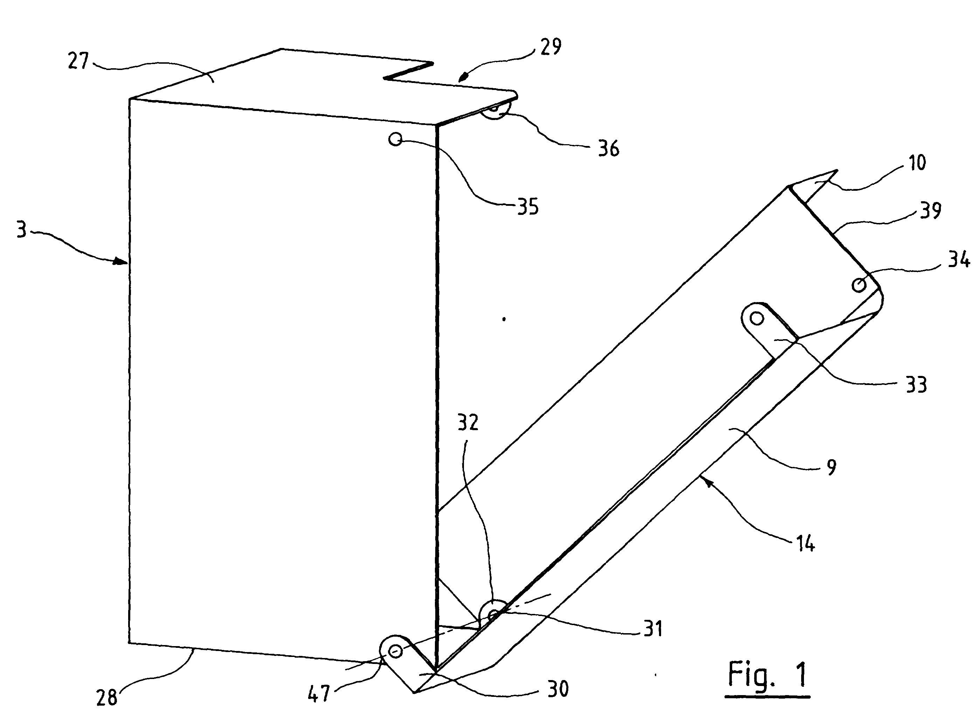

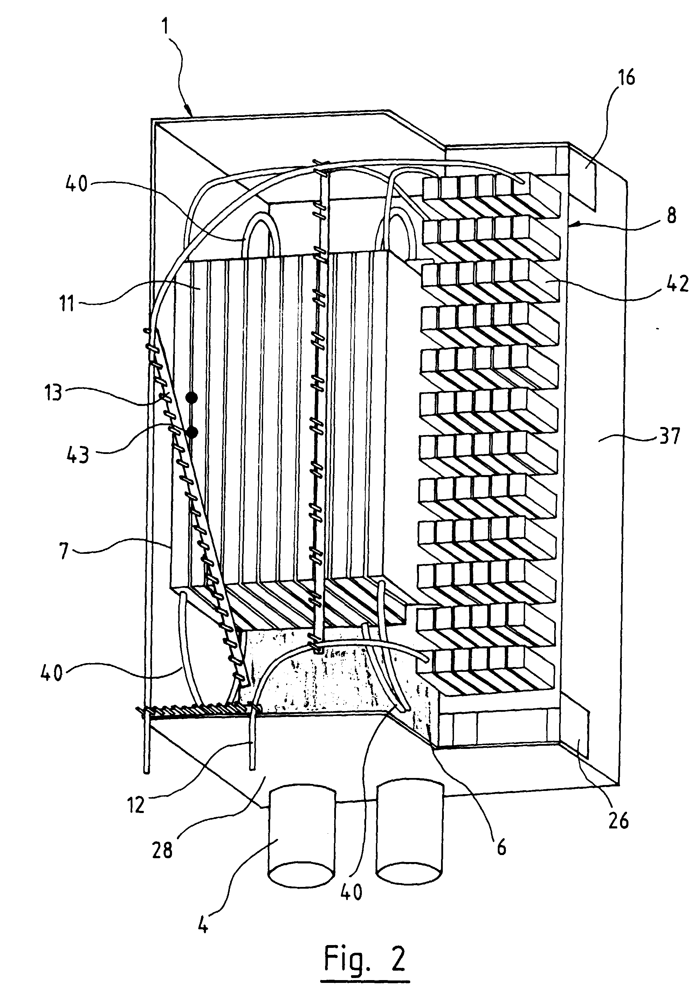

Selon la figure 1, un boîtier 3 destiné à constituer l'enveloppe extérieure d'une tête de câbles est constitué dans un matériau qui peut être métallique selon une forme essentiellement parallélépipédique. Sur ce boîtier est monté pivotant un support 14. Le boîtier 3 présente sur ses faces supérieure 27 et inférieure 28 un décrochement 29 pouvant coopérer avec le support 14 lorsque celui-ci est positionné de façon à fermer le boîtier. Ce décrochement 29 permet de limiter le volume intérieur du boîtier 3 et d'une façon générale est un moyen permettant de réduire l'encombrement de la tête de câble. Le support 14 est également constitué d'une pièce qui peut être métallique présentant dans sa partie supérieure des moyens de solidarisation audit boîtier 3 et dans sa partie inférieure des moyens permettant de faire pivoter ledit support 14 selon un axe de rotation 47. Plus précisément ces moyens sont constitués dans la partie inférieure du support par un dispositif de forme réalisé par poinçonnage/pliage et permettant le pivotement du support 14 de façon à déterminer une position selon laquelle le support est à la verticale et correspond à la fermeture du boîtier et une position dans laquelle le support 14 est à l'horizontale et correspond à l'ouverture maximale du boîtier 3. Ce dispositif de forme comprend une patte 30 apte à être solidarisée au boîtier et un orifice 31 apte à coopérer avec une patte 32 du boîtier fixée sur la face inférieure 28 de celui-ci. D'autres moyens sont prévus dans la partie supérieure du support 14 de façon à permettre le maintien du boîtier 3 en position fermée. Ces moyens sont constitués par une patte 33 et un orifice 34 pouvant coopérer respectivement avec un orifice 35 et une patte 36 du boîtier, par exemple grâce à des chevilles. Le boîtier 3 peut être aisément ouvert en ôtant lesdites chevilles. L'adaptation du support 14 au boîtier 3 et plus précisément la coopération de ce capot avec le décrochement 29 est permise grâce à la forme générale de ce support qui présente deux plans décalés 9, 10 parallèles entre eux et reliés par arrondis à un plan de liaison perpendiculaire 39. Le plan 9, destiné à recevoir l'organiseur d'épissures, supporte les pattes 30 et 33 tandis que le plan de liaison 39 est percé des orifices 31 et 34. Le plan 10, situé en retrait lorsque l'on regarde de face le support 14 monté sur le boîtier de façon à fermer celui-ci, est percé d'une ouverture quadrangulaire (non visible sur la figure 1) destinée à accueillir une platine de connecteurs. Par ailleurs, et comme représenté à la figure 2, le boîtier 3 présente sur l'une de ses faces latérales 37 deux passages 16, 26 autorisant la communication de l'intérieur du boîtier 3 avec l'extérieur ou avec un boîtier adjacent. Ces passages 16, 26 peuvent être fermés lorsqu'ils ne sont pas utilisés, par des moyens permettant d'empêcher la poussière de pénétrer à l'intérieur du boîtier tels que, par exemple, une pièce de mousse fendue.

Toujours selon la figure 2 représentant la tête de câbles 1 dans son ensemble, la face inférieure 28 du boîtier 3 présente deux arrivées de câbles 4 jusqu'à un sous-ensemble d'épanouissement 6 au niveau desquels les fibres optiques desdits câbles sont au moins partiellement individualisées. Si les câbles sont du type comprenant des tubes de renfort, les fibres sont dénudées de ces tubes. Des moyens permettant l'arrêt et le maintien en position des fibres sont inclus dans le sous-ensemble d'épanouissement 6 de façon à immobiliser les fibres optiques et à arrêter les autres constituants du câble tels que le matériau de remplissage, les tubes de renfort ou le porteur central. Les fibres optiques, généralement groupées au maximum par six à l'intérieur du câble sont ainsi bloquées en position, par exemple grâce à des férules, et éventuellement gardées groupées à la sortie du sous-ensemble d'épanouissement 6. A ce niveau, les fibres ou groupes de fibres sont munis de tubes de protection 40 permettant de protéger leur acheminement du sous-ensemble d'épanouissement 6 vers l'organiseur d'épissures 7 solidarisé par une charnière 43 fixée au capot 14 montré en transparence perpendiculairement à la direction d'entrée des fibres optiques dans l'organiseur d'épissures 7. Lorsque le boîtier est fermé, ces tubes de protection 40 décrivent grossièrement une trajectoire en S allant de la partie supérieure du sous-ensemble d'épanouissement 6 et redescendant vers la partie inférieure de l'organiseur d'épissure 7 en observant une courbe dans la partie supérieure du boîtier. La portion des tubes se situant à proximité de l'axe de rotation 47 de l'ensemble pivotant 46 constitué par le support 14, l'organiseur d'épissures 7 et la platine de connexion 8 se déplace donc faiblement lors de l'ouverture du boîtier. Le trajet suivi par ces tubes respecte par ailleurs les contraintes mécaniques liées au bon fonctionnement des fibres optiques, en particulier un rayon de courbure minimal de celles-ci, à la fois lorsque le boîtier 3 est ouvert et lorsque le boîtier 3 est fermé. L'organiseur d'épissures 7 est fixé par une charnière unique 43 à la face interne du support 14 et est constitué de cassettes 41 articulées à la façon d'un livre au niveau desquelles les fibres optiques sont individualisées et servant également de lieu de stockage des longueurs excédentaires de fibres. Au niveau de ces cassettes 41, les fibres sont soit raccordées à d'autres fibres, soit lovées en attente d'un raccordement futur. Le support 14 est muni sur son plan en retrait 10 d'une platine 8 de connexion supportant une connectique 42. Les fibres optiques sortant de l'organiseur d'épissures 7 arrivent à ces connecteurs 42 selon un chemin respectant leur rayon de courbure minimal et peuvent ainsi être reliées à des équipements. Avantageusement, la platine 8 peut être constituée de connecteurs munis de fibres amorces destinées à être reliées à la demande aux fibres présentes dans l'organiseur d'épissures 7.

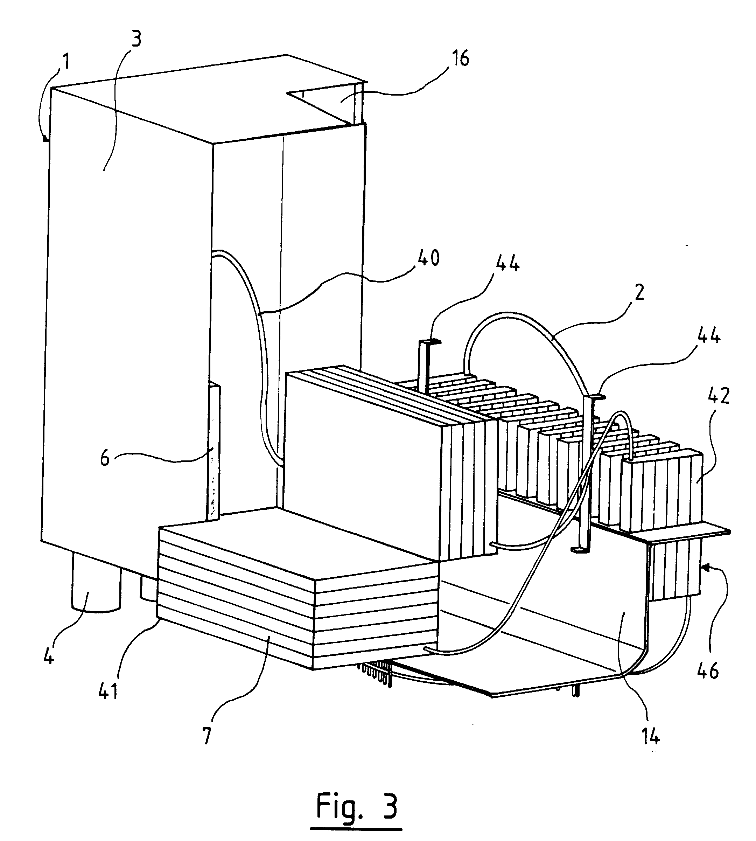

Selon la figure 3, la tête de câbles 1 est présentée en position ouverte, le support 14 étant basculé en position horizontale. Dans cette position, les éléments internes de la tête de câbles sont accessibles à l'utilisateur. Lors de l'ouverture de la tête de câbles 1 la longueur des tubes de protection 40 permet le basculement du support 14 sans exercer d'effort sur ceux-ci et en respectant le rayon de courbure minimal des fibres optiques. Selon la figure 3, l'organiseur d'épissures 7 est représenté basculé vers l'extérieur du support 14 grâce à la charnière 43 et ouvert sur la cinquième cassette si l'on prend comme première cassette celle se trouvant en position supérieure lorsque l'organiseur d'épissures 7 est basculé. L'utilisateur peut ainsi travailler sur la cassette de son choix et établir les épissures ou les lovages des fibres arrivant à l'élément 7 par les tubes 40 sans perturber les liaisons en service. A la sortie de l'organiseur d'épissure, les fibres optiques 2 individualisées sont raccordées aux connecteurs 42 de la platine 8. Afin de respecter le rayon de courbure minimal de ces fibres, impératif au bon fonctionnement de celles-ci, leur chemin de l'organiseur d'épissures 7 aux connecteurs 42 est guidé grâce à deux doigts de guidage 44. A la sortie des connecteurs 42, les fibres optiques doivent également être maintenues de telle sorte que leur rayon de courbure minimal soit respecté et protégé par des jarretières 12. Ces jarretières sont, dans ce but, guidées par des peignes 13 disposés de façon adéquate. La tête de câble 1 permet d'organiser la connexion totale ou partielle des fibres de un ou deux câbles 4 ou d'épissurer directement tout ou partie des fibres d'un câble entrant aux fibres d'un câble sortant. Cette opération peut être menée en une ou plusieurs interventions.

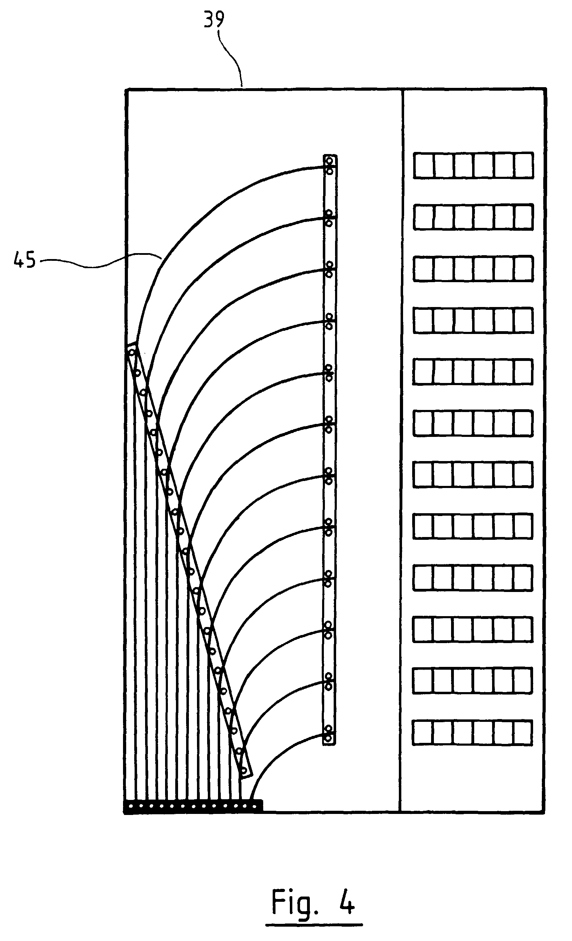

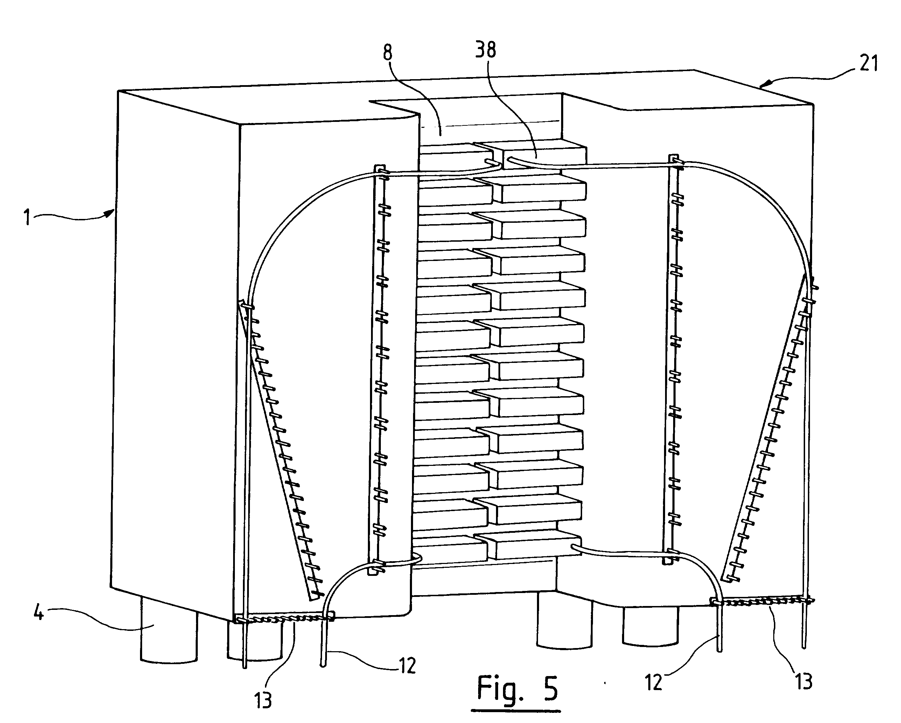

Selon la figure 4, afin de protéger les connexions réalisées au niveau de la platine 8, le support 14 est muni d'un capot de protection 39 représenté à la figure 5, pouvant être en matériau transparent, et sur lequel sont fixés des moyens 45 permettant de renseigner l'utilisateur sur le chemin devant être suivi par les jarretières 12 à la sortie des connecteurs. Ces moyens 45 peuvent être constitués par des étiquettes adhésives matérialisant les connecteurs 42, les peignes 13 et le cheminement de celles-ci permettant le respect de leur rayon de courbure.

Bien que l'invention ait pour but de proposer une tête de câbles modulaire c'est à dire présentant des moyens permettant de la solidariser à d'autres têtes de câbles, l'invention vise plus précisément en ensemble de deux tête de câbles. Ainsi selon la figure 5, deux têtes de câbles 1, 21 sont assemblées entre elles de façon à constituer un ensemble pouvant permettre la répartition de cent quarante quatre fibres optiques. La tête de câbles 1 est conforme aux figures 1 à 4 et la tête de câbles 21 présente une configuration analogue mais inversée autorisant l'association des deux têtes de façon à ce que leurs platines 8, 38 de connecteurs puissent être disposées côte à côte et de façon à ce que les ouvertures 16, 26 de chaque tête soient placées en regard afin de permettre le passage de fibres ou de câbles d'un boîtier à l'autre. Lorsqu'un tel passage est établi, les éléments passant d'un boîtier à l'autre sont insérés dans les fentes des mousses 16 et 26.

L'ensemble constitué des deux têtes 1, 21 permet le traitement des fibres optiques contenues dans un à quatre câbles et notamment l'épissurage direct des fibres d'un câble entrant au niveau d'une tête à tout ou partie des fibres d'un ou de deux câbles sortant au niveau de l'autre tête.

## Revendications

1. Tête de câbles (1) modulaire à fibres optiques (2), chaque câble étant notamment du type incluant une pluralité de fibres optiques (2), ladite tête de câble étant constituée d'un boîtier (3) comprenant :
- au moins une entrée de câble (4);
- au moins un sous-ensemble d'épanouissement (6) directement relié à ladite entrée de câbles et permettant le maintien mécanique de l'extrémité d'au moins un câble et l'exploitation des modules de fibres optiques (2) contenues dans ledit câble ;
- au moins un organiseur d'épissures (7) permettant le rangement et/ou l'épissurage desdites fibres optiques (2) ;
- au moins une platine de connexion (8) permettant notamment la connexion des fibres optiques (2) à des équipements par l'intermédiaire de jarretières (12) individuelles,
- ledit organiseur d'épissures (7) et ladite platine de connexion (8) étant fixés à proximité l'un de l'autre sur un même support (14) monté pivotant sur ledit boîtier (3) selon une course guidée définissant une position fermée de fonctionnement et au moins une position ouverte d'accès, ledit support (14), l'organiseur d'épissures (7) et la platine de connexion (8) constituant un ensemble basculant (46), les liaisons allant du sous-ensemble d'épanouissement (6) à l'organiseur d'épissures (7) présentant une position d'extension telles qu'au moins une portion de ces liaisons passe à proximité immédiate de l'axe de rotation dudit support (14) sur le boîtier (3), ledit axe de rotation (47) étant perpendiculaire à la direction d'entrée des fibres optiques dans l'organiseur d'épissures (7) ; caractérisée en ce que
ledit organiseur d'épissures (7) des fibres optiques (2) est constitué de cassettes modulaires (11) articulées permettant de manipuler les fibres contenues dans chacune d'entre elles sans perturber les liaisons en service, ledit organiseur d'épissures (7) étant fixé audit support (14) par au moins une charnière (43) permettant son basculement en position de travail et la manipulation desdites cassettes lorsque ledit boîtier (3) est ouvert.

2. Tête de câbles (1) à fibres optiques (2) selon la revendication 1 caractérisée en ce que ledit support (14) présente deux plans décalés (9, 10), ledit organiseur d'épissures (7) étant fixé sur l'un (9) de ces plans et ladite platine de connexion (8) étant fixée sur l'autre de ces plans (10).

3. Tête de câbles (1) à fibres optiques (2) selon la revendication 1 ou 2 caractérisée en ce que l'axe de rotation (47) dudit support (14) sur le boîtier (3) est déporté latéralement par rapport à l'organiseur d'épissures (7) et à la platine de connexion (8).

4. Tête de câbles (1) à fibres optiques (2) selon l'une des revendications 1 à 3 caractérisée en ce que ladite charnière (43) est fixée audit support (14) perpendiculairement à l'axe de rotation (47) de l'ensemble basculant (46).

5. Tête de câbles (1) à fibres optiques (2) selon l'une des revendications 1 à 4 caractérisée en ce que ladite platine de connexion (8) est au moins partiellement amovible de façon à permettre l'évolution de la connectique et du nombre de connexions sans perturber les connexions en service.

6. Tête de câbles (1) à fibres optiques (2) selon la revendication 5 caractérisé en ce que ladite platine de connexion (8) peut être constituée de connecteurs (42) munis de fibres amorces destinées à être reliées à la demande aux fibres présentes dans l'organiseur d'épissures (7).

7. Tête de câbles (1) à fibres optiques (2) selon l'une des revendications 1 à 6 caractérisée en ce que des moyens de guidage et de maintien de jarretières (12) sont fixés sur un plan en saillie par rapport au plan (10) de fixation des connecteurs (12), de façon à permettre le respect d'un rayon minimal de courbure des fibres à la sortie des jarretières (12) et à faciliter la préhension des jarretières.

8. Tête de câbles (1) à fibres optiques (2) selon la revendication 7 caractérisée en ce que lesdits moyens de guidage sont constitués par des peignes (13) pouvant être collés à la demande et suivant l'orientation de la tête de câble (1) sur ledit support (14).

9. Tête de câbles (1) à fibres optiques (2) selon l'une des revendications 1 à 8 caractérisée en ce qu'un capot (39) de protection amovible est emboîté sur la face extérieure dudit support de façon à permettre la protection et le repérage par étiquetage de l'ensemble des connexions et des départs de jarretières (12).

10. Tête de câbles (1) à fibres optiques (2) selon l'une des revendications 1 à 9 caractérisée en ce qu'elle comprend deux entrées de câbles, l'une ou l'autre pouvant accueillir un câble entrant et/ou un câble sortant, au moins certaines des fibres du câble sortant étant raccordées à certaines des fibres du câble entrant au niveau de l'organiseur d'épissures.

11. Tête de câbles (1) à fibres optiques (2) selon l'une des revendication 1 à 10 caractérisée en ce que ledit boîtier (3) est muni de moyens (16) de passage de câbles ou de fibres vers un autre boîtier (21) pouvant être clos par des moyens de fermeture amovible.

12. Une double tête de câbles à fibres optiques (2) caractérisée en ce qu'elle est constituée d'une première tête de câbles (1) et d'une seconde tête de câbles (21) conformes à la revendication 11, la ou les entrées de câbles (25) de ladite première (1) et de ladite seconde tête (21) et les moyens de passage (16,26) de câbles ou de fibres entre ladite première et ladite seconde tête étant positionnés de telle sorte que ladite première tête (1) puisse être placée symétriquement par rapport à la seconde tête (21), de façon à ce que les câbles arrivent parallèlement dans ladite première et ladite seconde tête et de façon à ce que la platine de connexion (8) de ladite première tête et la platine de connexion (38) de ladite seconde tête soient placées le plus près possible l'une de l'autre.

## Patentansprüche

1. Modularer Kopf (1) für optische Faserkabel (2), wobei jedes Kabel eine Vielzahl von optischen Fasern (2) enthält und wobei der Kabelkopf aus einem Gehäuse (3) besteht, welches folgendes umfaßt:
- mindestens einen Kabeleingang (4);
- mindestens eine Ausbreitungsuntergruppe (6), welche direkt mit dem Kabeleingang verbunden ist und die mechanische Halterung des Endes von mindestens einem Kabel und den Betrieb der in diesem Kabel enthaltenen optischen Fasermodule (2) sicherstellt;
- mindestens einen Spleißungsorganisator (7), der das Aufbewahren und/oder das Spleißen der optischen Fasern (2) ermöglicht;
- mindestens eine Anschlußplatine (8), welche insbesondere den Anschluß der optischen Fasern (2) an Geräte über einzelne Koppelleiter (12) ermöglicht,
- wobei der Spleißungsorganisator (7) und die Anschlußplatine (8) nahe beieinander auf demselben Träger (14) befestigt sind, welcher schwenkbar am Gehäuse (3) angebracht ist, gemäß eines geführten Weges, der eine geschlossene Betriebsposition und mindestens eine offene Zugangsposition definiert, wobei der Träger (14), der Spleißungsorganisator (7) und die Anschlußplatine (8) eine schwenkbare Gruppe (46) bilden und wobei die Verbindungen zwischen der Ausbreitungsuntergruppe (6) und dem Spleißungsorganisator (7) eine solche Ausbreitungsposition aufweisen, daß mindestens ein Teil dieser Verbindungen in unmittelbarer Nähe der Drehachse des Trägers (14) am Gehäuse (3) entlangläuft, wobei die Drehachse (47) senkrecht zur Eingangsrichtung der optischen Fasern in dem Spleißungsorganisator (7) liegt;
dadurch gekennzeichnet, daß der Spleißungsorganisator (7) für die optischen Fasern (2) aus modularen Gelenkkassetten (11) besteht, welche die Handhabung der in einer jeden Kassette enthaltenen Fasern ermöglichen, ohne die in Betrieb befindlichen Verbindungen zu stören, wobei der Spleißungsorganisator (7) durch mindestens ein Scharnier (43) an dem Träger (14) befestigt ist, welches sein Schwenken in die Betriebsposition und die Handhabung der Kassetten bei offenem Gehäuse (3) ermöglicht.

2. Kopf (1) für optische Faserkabel (2) gemäß Anspruch 1,
dadurch gekennzeichnet, daß derTräger (14) zwei gegeneinander versetzte Ebenen (9, 10) aufweist, wobei der Spleißungsorganisator (7) auf einer dieser Ebenen (9) und die Anschlußplatine (8) auf der anderen Ebene (10) befestigt ist.

3. Kopf (1) für optische Faserkabel (2) gemäß Anspruch 1 oder 2,
dadurch gekennzeichnet, daß die Drehachse (47) des Trägers (14) auf dem Gehäuse (3) gegenüber dem Spleißungsorganisator (7) und der Anschlußplatine (8) seitlich versetzt ist.

4. Kopf (1) für optische Faserkabel (2) gemäß einem der Ansprüche 1 bis 3,
dadurch gekennzeichnet, daß das Scharnier (43) senkrecht zur Drehachse (47) der schwenkbaren Gruppe (46) auf dem Träger (14) angebracht ist.

5. Kopf (1) für optische Faserkabel (2) gemäß einem der Ansprüche 1 bis 4,
dadurch gekennzeichnet, daß die Anschlußplatine (8) zumindest teilweise abnehmbar ist, um die Ausführung der Anschlüsse und die Änderung der Zahl der Anschlüsse zu ermöglichen, ohne die in Betrieb befindlichen Anschlüsse zu stören.

6. Kopf (1) für optische Faserkabel (2) gemäß Anspruch 5,
dadurch gekennzeichnet, daß die Anschlußplatine (8) aus Verbindungsteilen (42) bestehen kann, welche über Anschlußfasern verfügen, die nach Bedarf mit den im Spleißungsorganisator (7) vorhandenen Fasern verbunden werden können.

7. Kopf (1) für optische Faserkabel (2) gemäß einem der Ansprüche 1 bis 6,
dadurch gekennzeichnet, daß Mittel zum Führen und zum Halten der Koppelleiter (12) auf einer Ebene befestigt sind, die gegenüber der Befestigungsebene (10) der Koppelleiter (12) vorsteht, um einen geringsten Biegungsradius der Fasern am Ausgang der Koppelleiter (12) einzuhalten und um das Festhalten durch die Koppelleiter zu erleichtern.

8. Kopf (1) für optische Faserkabel (2) gemäß Anspruch 7,
dadurch gekennzeichnet, daß die Führungsmittel aus Kämmen (13) bestehen, die bei Bedarf entsprechend der Richtung des Kabelkopfes (1) auf den Träger (14) geklebt werden können.

9. Kopf (1) für optische Faserkabel (2) gemäß einem der Ansprüche 1 bis 8,
dadurch gekennzeichnet, daß der Träger nach außen hin eine abnehmbare Schutzhaube (39) trägt, um den Schutz und die Kennzeichnung der Anschlüsse und der Ausgänge der Koppelleiter (12) mit Etiketten zu gewährleisten.

10. Kopf (1) für optische Faserkabel (2) gemäß einem der Ansprüche 1 bis 9,
dadurch gekennzeichnet, daß er zwei Kabeleingänge umfaßt, wobei der eine oder der andere ein Eingangskabel und/oder ein Ausgangskabel aufnehmen kann und wobei mindestens einige der Fasern des Ausgangskabels mit einigen der Fasern des Eingangskabels auf der Höhe des Spleißungsorganisators verbunden sind.

11. Kopf (1) für optische Faserkabel (2) gemäß einem der Ansprüche 1 bis 10,
dadurch gekennzeichnet, daß das Gehäuse (3) über Mittel (16) zur Durchführung von Kabeln oder von Fasern zu einem anderen Gehäuse (21) verfügt, welche durch abnehmbare Verschlüsse verschließbar sind.

12. Doppelter Kopf (1) für optische Faserkabel (2),
dadurch gekennzeichnet, daß er aus einem ersten Kabelkopf (1) und aus einem zweiten Kabelkopf (21), beide gemäß Anspruch 11, besteht, wobei der oder die Kabeleingänge (25) des ersten Kopfes (1) und des zweiten Kopfes (21) und die Durchführungsmittel (16, 26) für Kabel oder für Fasern zwischen dem ersten und dem zweiten Kopf derart angebracht sind, daß der erste Kopf (1) symmetrisch gegenüber dem zweiten Kopf (21) angebracht werden kann, damit die Kabel parallel im ersten und im zweiten Kopf ankommen und damit die Anschlußplatine (8) des ersten Kopfes und die Anschlußplatine (38) des zweiten Kopfes so dicht wie möglich beieinander liegen.

## Claims

1. Modular optical fibre (2) cable distribution head (1), each cable being especially of the type which includes a plurality of optical fibres (2), the said cable distribution head consisting of a case (3) comprising:
- at least one cable inlet (4);
- at least one break-out subassembly (6) which is directly connected to the said cable inlet and allows the end of at least one cable to be held in place mechanically and allows the modules of optical fibres (2) contained in the said cable to be used;
- at least one splice organizer (7) allowing the said optical fibres (2) to be stowed away and/or spliced;
- at least one connection support plate (8) allowing, in particular, the optical fibres (2) to be connected to items of equipment via individual jumpers (12);
- the said splice organizer (7) and the said connection support plate (8) being fixed in proximity to each other on the same support (14) which is mounted so as to pivot on the said case (3) along a guided path defining a closed operating position and at least one open position for access, the said support (14), the splice organizer (7) and the connection support plate (8) constituting a pivoting assembly (46), the connections going from the break-out subassembly (6) to the splice organizer (7) adopting an extended position, such that at least a portion of these connections passes in close proximity to the axis of rotation of the said support (14) on the case (3), the said axis of rotation (47) being perpendicular to the direction in which the optical fibres enter the splice organizer (7); characterized in that the said optical fibre (2) splice organizer (7) consists of ringed modular cassettes (11) allowing the fibres contained in each of them to be handled without disturbing the connections in service, the said splice organizer (7) being fixed to the said support (14) by at least one hinge (43) allowing it to be swung out into the working position and allowing the said cassettes to be handled when the said case (3) is opened.

2. Optical fibre (2) cable distribution head (1) according to Claim 1, characterized in that the said support (14) has two offset planes (9, 10), the said splice organizer (7) being fixed on one (9) of these planes and the said connection support plate (8) being fixed on the other (10) of these planes.

3. Optical fibre (2) cable distribution head (1) according to Claim 1 or 2, characterized in that the axis of rotation (47) of the said support (14) on the case (3) is shifted laterally with respect to the splice organizer (7) and to the connection support plate (8).

4. Optical fibre (2) cable distribution head (1) according to one of Claims 1 to 3, characterized in that the said hinge (43) is fixed to the said support (14) perpendicularly to the axis of rotation (47) of the pivoting assembly (47).

5. Optical fibre (2) cable distribution head (1) according to one of Claims I to 4, characterized in that the said connection support plate (8) is at least partially removable so as to allow both the system of connectors and the number of connections to be changed without disturbing the connections in service.

6. Optical fibre (2) cable distribution head (1) according to Claim 5, characterized in that the said connection support plate (8) may consist of connectors (42) provided with starter fibres which are intended to be joined, as required, to the existing fibres in the splice organizer (7).

7. Optical fibre (2) cable distribution head (1) according to one of Claims 1 to 6, characterized in that means for guiding the jumpers (12) and holding them in place are fixed on a plane projecting from the plane (10) to which the connectors (42) are fixed, so as to respect a minimum radius of curvature of the fibres at the point where the jumpers (12) emerge and so as to make it easier to grip the jumpers.

8. Optical fibre (2) cable distribution head (1) according to Claim 7, characterized in that the said guiding means consist of combs (13) which may be adhesively bonded as required, to suit the orientation of the cable distribution head (1), onto the said support (14).

9. Optical fibre (2) cable distribution head (1) according to one of Claims 1 to 8, characterized in that a removable protective cover (39) is fitted over the external face of the said support so as to allow all the connections and the starting points of the jumpers (12) to be protected and identified by labelling.

10. Optical fibre (2) cable distribution head (1) according to one of Claims 1 to 9, characterized in that it comprises two cable inlets, it being possible for either of them to take an incoming cable and/or an outgoing cable, at least some of the fibres of the outgoing cable being connected up to some of the fibres of the incoming cable within the splice organizer.

11. Optical fibre (2) cable distribution head (1) according to one of Claims 1 to 10, characterized in that the said case (3) is provided with means (16) for cables or fibres to pass on to another case (21), which may be closed by removable closure means.

12. A double optical fibre (2) cable distribution head, characterized in that it consists of a first cable distribution head (1) and of a second cable distribution head (21) in accordance with Claim 11, the cable inlet or inlets (25) of the said first distribution head (1) and of the said second distribution head (21) and the means (16, 26) allowing cables or fibres to pass between the said first distribution head and the said second distribution head, being positioned in such a way that the said first distribution head (1) can be placed symmetrically with respect to the second distribution head (21) so that the cables are parallel when they enter the said first distribution head and the said second distribution head and so that the connection support plate (8) of the said first distribution head and the connection support plate (38) of the said second distribution head are placed as close as possible to each other.
